# EUROPEAN PATENT APPLICATION

(11) **EP 4 513 354 A1**
(43) Date of publication of application: **26.02.2025**
(21) Application number: 24195716.6
(22) Date of filing: 21.08.2024
(51) Int. Cl.: G06F 16/28, G06F 16/901

(54) **UNIFICATION REDUCTION OF COMPLEX TRAVERSAL AND SEARCH APPLICATION PROGRAMMING INTERFACE**

(30) Priority: 25.08.2023 US 202318238030
(71) Applicant: Roku, Inc., San Jose, CA 95110 (US)
(72) Inventor: WOODWARD, JR., Donald R., San Jose, 95110 (US)
(74) Representative: Mewburn Ellis LLP

(57) **Abstract**

Disclosed herein are system, apparatus, article of manufacture, method and/or computer program product embodiments, and/or combinations and sub-combinations thereof, for searching for and reading data from a hierarchical data set stored in a database accessible to a network device such as a media device or a display device. An example embodiment operates by the media device receiving a request for the data in the hierarchical data set where the request is implemented as a unified application programming interface (API) traversal function that is configured with an overloaded search parameter and an integer marker for tracking a current position of the unified API traversal function within the hierarchical data set. The unified API traversal function enables a single call to be initiated for data within the hierarchical data set without the need to call additional API callback functions to traverse the data set.

## Description

### FIELD

This disclosure is generally directed to reducing operational load of a complex traversal application programming interface.

### SUMMARY

Provided herein are system, apparatus, article of manufacture, method and/or computer program product embodiments, and/or combinations and sub-combinations thereof, for a media device identifying data within a hierarchical data set. In some aspects, data may be accessed using a unified application programming interface (API) traversal function that is configured to perform different types of traversals of the hierarchical data set. In some aspects, a database may store data in the form of a hierarchical data set and receive a request to access and/or parse data stored within the hierarchical data set. In some aspects, the request may be implemented as the unified API traversal function. The request may be submitted by an application installed on the media device. The database may parse the request to identify a search parameter within the request. The search parameter may be overloaded such that different values of the search parameter may indicate different types of traversals to be performed on the hierarchical data set. Examples of the types of traversals include a resource search (e.g., for a specific search string provided in the request) or a scan of the hierarchical data set. The database may the perform a traversal of the hierarchical data set as indicated by the value of the search parameter. In some aspects, the request may include an integer marker that may be incremented during performance of the traversal in order to track a position in the hierarchical data set. In some aspects, the position may indicate the position where the search string is located within the hierarchical data set. In some aspects, the position may indicate the current position in the hierarchical data set where the scan is currently located in its traversal of the hierarchical data set.

In some aspects, the configuration of the unified API traversal function allows the traversal of the hierarchical data set to be performed without additional calls to other API functions. In other words, the unified API traversal function may be called a single time without the need for callback API functions to search the hierarchical data set or new API functions to be written for each search of the hierarchical set.

### BRIEF DESCRIPTION OF THE FIGURES

The accompanying drawings are incorporated herein and form a part of the specification.
FIG. 1 illustrates a block diagram of a multimedia environment, according to some aspects.
FIG. 2 illustrates a block diagram of a streaming media device, according to some aspects.
FIG. 3 illustrates a flowchart for displaying and modifying a screensaver, according to some aspects.
FIG. 4 illustrates an example computer system useful for implementing various aspects.

In the drawings, like reference numbers generally indicate identical or similar elements. Additionally, generally, the left-most digit(s) of a reference number identifies the drawing in which the reference number first appears.

### DETAILED DESCRIPTION

Data retrieval, especially in the field of streaming devices, has become increasingly more complicated as the amount of data being processed by devices increases. Some methods of searching for and browsing data from storage to programs executing on these devices over formats, such as JavaScript Object Notation (JSON) and extensible markup language (XML), require complicated application program interfaces (APIs) that present different models with multiple different API functions.

Another complicating factor for those applications and programs that utilize JSON or XML is that data may be stored in a resource tree or hierarchical format. Resource trees are compact binary representations of JSON. Resource trees may include a root node at the base of the tree with subsequent levels of nodes (children nodes) branching from the root node. Examples include a directory of files in a file system or a hierarchy of HTML pages for a web site. Hierarchical, or tree, data formats may require multiple different functions in order to search and browse the tree. These API functions may serve a single purpose so attempts to search for and/or browse data can require multiple sequential API function calls. Examples of such API functions include retrieving a variable value, searching for a variable, retrieving a value within a sub-tree, searching for a variable within a sub-tree, scanning a tree to observe the variables and values (without prior knowledge), and scanning a sub-tree to observe the variables and values (without prior knowledge).

Using multiple API functions to traverse a hierarchical data set requires calling a specific sequence of API functions to iterate through each portion of the data set. That is, browsing or scanning data in the data set requires multiple steps (setting up the data set in a memory, walking through each node of the data set, iterating through each level of the data set) and each of the steps requires calling a specific API function. Each step also requires a programmer to write and execute each API function which increases the time needed to search or scan the data set, requires more memory of the device executing the API functions, and introduces more opportunities for errors and bugs.

Provided herein are system, apparatus, device, method and/or computer program product aspects, and/or combinations and sub-combinations thereof, for improving the communications between applications, such as those installed in streaming, network-enabled devices, and databases that store data in hierarchical data sets. Improvements include streamlining the number of function calls that are needed in order to access and parse data stored in the hierarchical data sets. Reducing the number of function calls to a single communication - a unified function call - increases the speed that data can be retrieved by applications and improves the efficiency of accurate data retrieval as there are less opportunities for errors.

In some aspects, multiple API functions may be consolidated into a unified API traversal function. Advantages of this implementation are a reduction of both code complexity and the memory requirements for an application to traverse (e.g., browse or search) datasets in a tree, reduction of the size of the code needed to perform the traversal, and increased efficiency in traversing the tree database. The unified API traversal function may be constructed with an integer marker and an overloadable search parameter. The unified API traversal function may be configured to iteratively search through each node of the tree and the integer marker may be configured to track a current position in the hierarchical data set, or tree. The overloadable search parameter may be configured such that if it is a null value, the traversal function will initiate a scan of the next item in the tree.

A unified API traversal function particularly benefits devices with limited memory (e.g., 64 KB of random access memory (RAM)). Using multiple API functions may require reading an entire hierarchical data set into RAM before a search or traversal is possible. In some aspects, each type of search may require a unique copy of the hierarchical data set to be read into RAM, often times with different formats, which increases code complexity and execution time.

As used in the specification and the appended claims, "content items" may also be referred to as "content," "content data," "content information," "content asset," "multimedia asset data file," or simply "data" or "information". Content items may be any information or data that may be licensed to one or more individuals (or other entities, such as businesses or groups). Content may be electronic representations of video, audio, text, graphics, or the like which may be but is not limited to electronic representations of videos, movies, or other multimedia, which may be but is not limited to data files adhering to MPEG2, MPEG, MPEG4 UHD, HDR, 4k, Adobe^{®} Flash^{®} Video (.FLV) format or some other video file format whether the format is presently known or developed in the future. The content items described herein may be electronic representations of music, spoken words, or other audio, which may be but is not limited to data files adhering to the MPEG1 Audio Layer 3 (.MP3) format, Adobe^{®}, CableLabs 1.0,1.1, 3.0, AVC, HEVC, H.264, Nielsen watermarks, V-chip data and Secondary Audio Programs (SAP), Sound Document (.ASND) format, or some other format configured to store electronic audio whether the format is presently known or developed in the future. In some cases, content may be data files adhering to the following formats: Portable Document Format (.PDF), Electronic Publication (.EPUB) format created by the International Digital Publishing Forum (IDPF), JPEG (.JPG) format, Portable Network Graphics (.PNG) format, dynamic ad insertion data (.csv), Adobe^{®} Photoshop^{®} (.PSD) format or some other format for electronically storing text, graphics and/or other information whether the format is presently known or developed in the future. Content items may be any combination of the above-described formats.

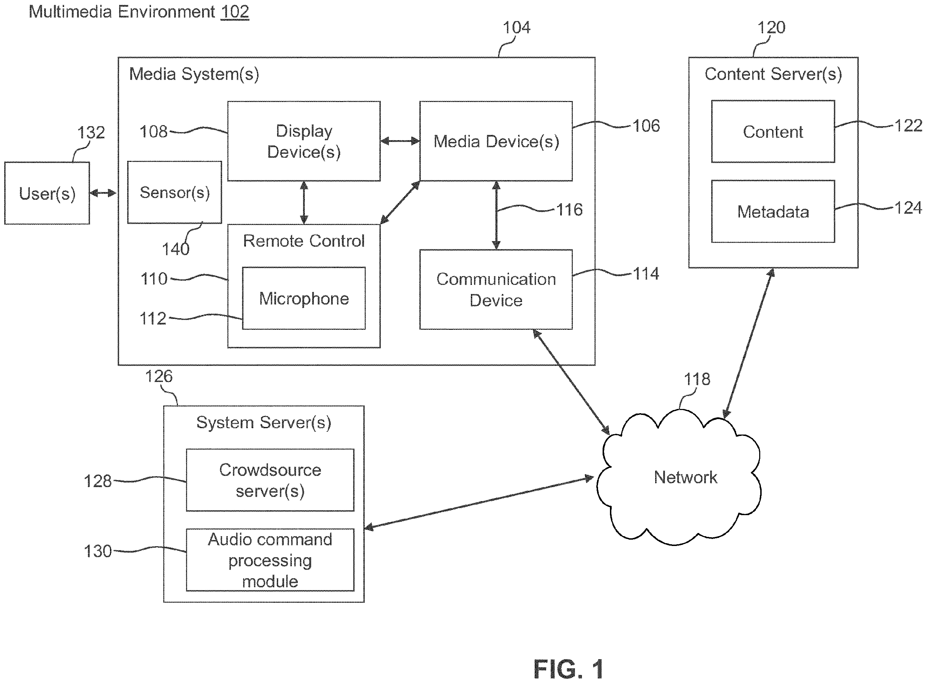

Various aspects of this disclosure may be implemented using and/or may be part of a multimedia environment 102 shown in FIG. 1. It is noted, however, that multimedia environment 102 is provided solely for illustrative purposes, and is not limiting. Aspects of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### Multimedia Environment

FIG. 1 illustrates a block diagram of a multimedia environment 102 for delivering screensaver content to a media system 104 for dynamically updating screensavers, according to some aspects. Multimedia environment 102 illustrates an example environment, architecture, ecosystem, etc., in which various aspects of this disclosure may be implemented. However, multimedia environment 102 is provided solely for illustrative purposes, and is not limiting. Aspects of this disclosure may be implemented and/or used in environments different from and/or in addition to multimedia environment 102 of FIG. 1, as will be appreciated by persons skilled in the relevant art(s) based on the teachings contained herein.

In a non-limiting example, multimedia environment 102 may be directed to supporting an object injection framework for dynamically updating a screensaver at one or more media device(s) 106. This may include an object server 134 delivering replacement objects for local storage at media devices, both predictively and based on requests submitted by media devices. An object injection engine implemented at media device(s) 106 may dynamically update screensavers that are currently displayed by media device(s) 106 using the replacement objects. Replacement objects may include any type of media that can be utilized and displayed as part of a screensaver including static images, audio, animated images, infographics, video, and interactive objects that can receive and respond to user input. Replacement objects may be branded or otherwise provided by different content providers such as advertisers, program providers, and device manufacturers.

The multimedia environment 102 may include one or more media systems 104. A media system 104 comprises many devices and can be implemented within a single location, or in distributed locations, such as in one or more of a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. For example, there may be one or more display devices 108 of media system 104 with each display device 108 being located in a separate location. User(s) 132 may operate the media system 104 to select and view content, such as content 122.

Each media system 104 may include one or more media device(s) 106 each coupled to one or more display device(s) 108. It is noted that terms such as "coupled," "connected to," "attached," "linked," "combined" and similar terms may refer to physical, electrical, magnetic, logical, etc., connections, unless otherwise specified herein.

Media device(s) 106 may be a streaming media device, a streaming set-top box (STB), cable and satellite STB, a DVD or BLU-RAY device, an internet of things (IoT) device, an audio/video playback device, a cable box, and/or a digital video recording device, to name just a few examples. Display device 108 may be a monitor, a television (TV), a computer, a computer monitor, a smart phone, a tablet, a wearable (such as a watch or glasses), an appliance, an IoT device, and/or a projector, to name just a few examples. In some aspects, media device(s) 106 can be a part of, integrated with, operatively coupled to, and/or connected to its respective display device 108.

For IoT devices, IoT applications may include functions for application programming interfaces (APIs) that translate between high-level or generic commands and IoT device specific commands. Such APIs may be made available to IoT application developers to enable them to easily code IoT applications that can be utilized with a wide variety of different IoT devices or IoT device types. Thus, for example, an API may expose a command that specifies that video should be captured from a camera and the API may translate between that command and a specific set of operations for capturing video from a camera of a particular IoT device make and model. Functions for APIs may access and search for data stored in hierarchical trees. In some aspects, IoT applications may utilize the unified API traversal function to search for and retrieve data necessary to perform functions of the application.

IoT applications made available for distribution by digital marketplace service 352 may incorporate APIs associated with social media platforms, microblogging services, video sharing services, email services, streaming media services, digital assistant services, or the like, so that features of these services may be incorporated into the IoT applications. Some straightforward and non-limiting examples of IoT applications that may incorporate third party services include an IoT application that turns on a smart lightbulb or turns a smart lightbulb a particular color in response to a message being received via a social media platform or an IoT application that activates a smart doorbell when an email is received by an email service. Examples of IoT devices include security cameras, network-enabled light bulbs,

Media device(s) 106 and/or display device(s) 108 may be configured with a library that includes a unified API traversal function that may be called by applications when searching for data in a hierarchical data set that is stored in any device, such as within media device(s) 106 and/or display device(s) 108. The unified API traversal function replaces the capabilities of multiple API functions that would be required for reading the hierarchical data set into memory in a tree format, walking through the tree or sub-trees, and iterating through level of the tree in order to identify data within the tree or providing a listing of data of the tree.

Each media device(s) 106 may be configured to communicate with network 118 via a communication device 114. The communication device 114 may include, for example, a cable modem or satellite TV transceiver. The media device(s) 106 may communicate with the communication device 114 over a link 116, wherein the link 116 may include wireless (such as WiFi) and/or wired connections. In some aspects, communication device 114 can be a part of, integrated with, operatively coupled to, and/or connected to a respective media device(s) 106 and/or a respective display device 108. Each media device(s) 106 may further be configured with components for displaying and modifying screensavers to display device 108.

In various aspects, the network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. The remote control 110 can be any component, part, apparatus and/or method for controlling the media device(s) 106 and/or display device 108, such as a remote control, a tablet, laptop computer, smartphone, wearable, on-screen controls, integrated control buttons, audio controls, or any combination thereof, to name just a few examples. In an embodiment, the remote control 110 wirelessly communicates with the media device(s) 106 and/or display device 108 using cellular, Bluetooth, infrared, etc., or any combination thereof. The remote control 110 may include a microphone 112, which is further described below. When implemented as a smartphone or tablet, operations of the remote control 110 may be provided by a software program installed on the smartphone or tablet that provide a user interface that includes controls of the remote control 110.

The multimedia environment 102 may include a plurality of content server(s) 120 (also called content providers, channels, or sources). Although only one content server 120 is shown in FIG. 1, in practice the multimedia environment 102 may include any number of object server(s) 120. Each content server 120 may be configured to communicate with network 118. Each content server 120 may be configured to communicate with network 118. Content server 120, media device(s) 106, display device 108, may be collectively referred to as a media device, which may be an extension of media system 104. In some aspects, a media device may include system server 126 as well.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or datan objects in electronic form. Content 122 may be the source displayed on display device 108.

In some aspects, metadata 124 comprises data about content 122. For example, metadata 124 may include closed captioning data, such as text data, associated with content 122. Metadata 124 may further include timeslots that link the closed captioning data to the audio data of content 122. The timeslots allow the display of the closed captioning data by display device 108 to be synced with the playback of audio data of content 122 such that the text provided by the closed captioning data matches the timeslot when the audio data is played such as by display device 108 or another sound playback device.

Metadata 124 may further include indicating or related to labels of the materials in the content 122, writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122, such as but not limited to a trick mode index.

The multimedia environment 102 may include one or more system server(s) 126. The system server(s) 126 may operate to support the media device(s) 106 from the cloud. It is noted that the structural and functional aspects of the system server(s) 126 may wholly or partially exist in the same or different ones of the system server(s) 126. System server(s) 126 and content server 120 together may be referred to as a media server system. An overall media device may include a media server system and media system 104. In some aspects, a media device may refer to the overall media device including the media server system and media system 104.

The media device(s) 106 may exist in thousands or millions of media systems 104. Accordingly, the media device(s) 106 may lend themselves to crowdsourcing aspects and, thus, the system server(s) 126 may include one or more crowdsource servers 128.

For example, using information received from the media device(s) 106 in the thousands and millions of media systems 104, the crowdsource server(s) 128 may identify similarities and overlaps in content requests and/or screensaver behavior received by and/or monitored by one or more media device(s) 106. Based on such information, the crowdsource server(s) 128 may identify patterns in the content requests and/or screensaver behavior, such as particular requests for movies or content, the length of time that a screensaver is displayed without interruption by the media device(s) 106, the number of times a screensaver is displayed for a certain time cycle, and any user interactions associated with the screensaver. Based on these identified patterns, crowdsource server(s) may generate recommendations for providing replacement objects to media device(s) 106; the replacement objects may be associated with the requested content by the same media device(s) 106 or by other media device(s) 106 associated with other users but that share similar demographic information. For example, these replacement objects may be associated with the movie and stored as metadata (e.g., metadata 124) for the movie so that subsequent requests for the movie may result in downloading the metadata. Playback of the movie by another media device(s) 106 may then result in automatically downloading related replacement objects that can be injected into screensavers which results in enhancing users' experience when screensavers are displayed. In some aspects, crowdsource server(s) 128 can be located at content server 120. In some aspects, some part of content server 120 functions can be implemented by system server 126 as well.

As another example, crowdsource server(s) 128 may initiate a watch party between multiple media device(s) 106, each of which may located at a different physical location and/or connected to different Wi-Fi networks. A watch party may comprise the synchronized playback of content across the multiple media device(s) 106. Aspects of the present disclosure may be applied to multiple media device(s) 106 such that the detection of user behavior or interaction by one or more media device(s) 106 or by system server 126 may result in the delivery of replacement objects at the multiple media device(s) 106.

In some aspects, the audio data received by the microphone 112 in the remote control 110 is transferred to the media device 106, which is then forwarded to the audio command processing module 130 in the system servers 126. The audio command processing module 130 may operate to process and analyze the received audio data to recognize the user 132's verbal command. The audio command processing module 130 may then forward the verbal command back to the media device 106 for processing.

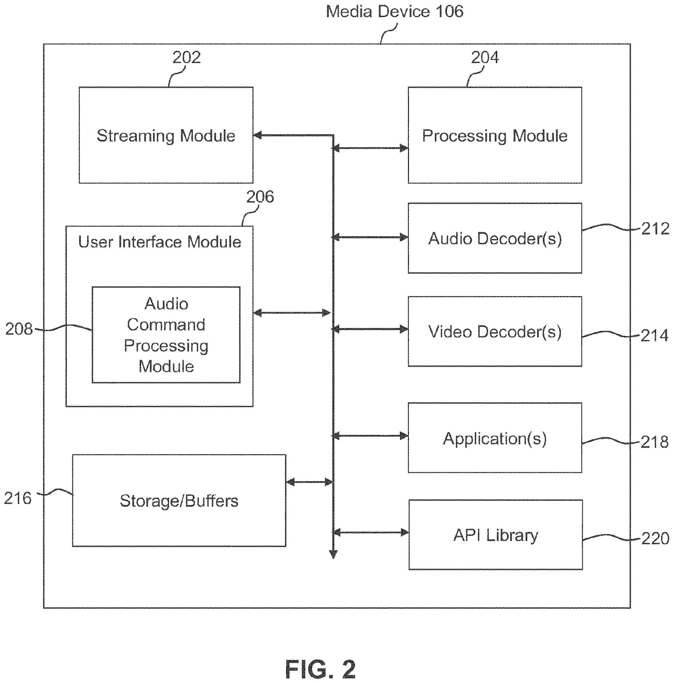

In some embodiments, the audio data may be alternatively or additionally processed and analyzed by an audio command processing module 208 in media device 106 (see FIG. 2). Media device 106 and system servers 126 may then cooperate to pick one of the verbal commands to process (either the verbal command recognized by audio command processing module 130 in system servers 126, or the verbal command recognized by audio command processing module 208 in media device 106).

FIG. 2 illustrates a block diagram of an example media device(s) 106, according to some aspects. Media device(s) 106 may include a streaming module 202, processing module 204, user interface module 206, audio command processing module 208, audio decoder 212, video decoder 214, storage/buffers 216, application(s) 218, and API library 220.

In some aspects, application(s) 218 may be implemented as one or more applications installed in media device(s) 106. Application(s) 218 may be configured to request data or resources from storage/buffers 218 which is configured to store data or resources in a hierarchical data format such as a tree structure. Examples of such data formats are JSON and XML. In some aspects, application(s) 218 may access and execute a unified API traversal function stored in API library 220. The unified API traversal function is configured to search the tree structure (if a search string is provided) or scan the tree structure, or a subset of the tree structure (if no search string is provided) without the use of other API functions or callback functions. When executed, the unified API traversal function is configured to iterate through the tree structure searching for the provided search string (when performing a search) or providing a listing of the data at each node of the tree structure (when performing a scan).

In some aspects, a search string may be a specific resource within the tree structure which may be located as a file or a folder (e.g., "/config/drivers/wifi/ssid"). When would Calling multiple API functions to search for a nested folder in a hierarchical directory, such as "/config/drivers/wifi/ssid", would require multiple callbacks to each level of the tree that would return each level of the nested folder. In contrast, the unified API traversal function is configured to iteratively step through the hierarchical directory without the need for calling additional API functions.

In some aspects, the hierarchical data set is stored in flash memory of the media device(s) 106. The use of multiple API functions required copying to the hierarchical data set from flash memory to RAM. In some aspects, the hierarchical data set is stored as a precompiled binary representation, or resource tree, in flash memory. In addition, this copying typically resulted in generating a new representation of the hierarchical data set into a different form, such as a binary resource tree, within RAM. The multiple API functions would then walk through the new resource tree within RAM. This implementation utilizes RAM and therefore is not efficient with memory resources. In contrast, the unified API traversal function is configured to read the hierarchical data set while it is stored in flash memory. This reduces the memory load for the media device(s) 106 and increases the efficiency of traversing the tree.

In some aspects, the unified API traversal function includes two parameters, an integer marker and a search parameter. The integer marker is configured to track a current position within the hierarchical data set for the unified API traversal function. The integer marker is incremented each time the unified API traversal function traverses a node in the hierarchical data set. When the unified API traversal function is configured to perform a search (e.g., when the search parameter includes a search string), the integer marker may be used to marker the position of the hierarchical data set where the first instance of the search string is matched to data in a node of the hierarchical data set. If another search is initiated, the unified API traversal function may then continue a search of the hierarchical data set from the position identified by the integer marker to look for another instance of the search string. In this manner, searched by the unified API traversal function are more efficient because it does not have to restart the search from the beginning of the hierarchical set when searching for additional instances of the search string. In other words, callbacks are no longer needed to traverse a hierarchical data set because of the use of the integer marker that is part of the unified API traversal function.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some embodiments, the user 132 may interact with the media device 106 via, for example, the remote control 110. For example, the user 132 may use the remote control 110 to interact with the user interface module 206 of the media device 106 to select content, such as a movie, TV show, music, book, application, game, etc. The streaming module 202 of the media device 106 may request the selected content from the content server(s) 120 over the network 118. The content server(s) 120 may transmit the requested content to the streaming module 202. The media device 106 may transmit the received content to the display device 108 for playback to the user 132.

In streaming embodiments, the streaming module 202 may transmit the content to the display device 108 in real time or near real time as it receives such content from the content server(s) 120. In non-streaming embodiments, the media device 106 may store the content received from content server(s) 120 in storage/buffers 216 for later playback on display device 108.

### Exemplary Unified API Traversal Function

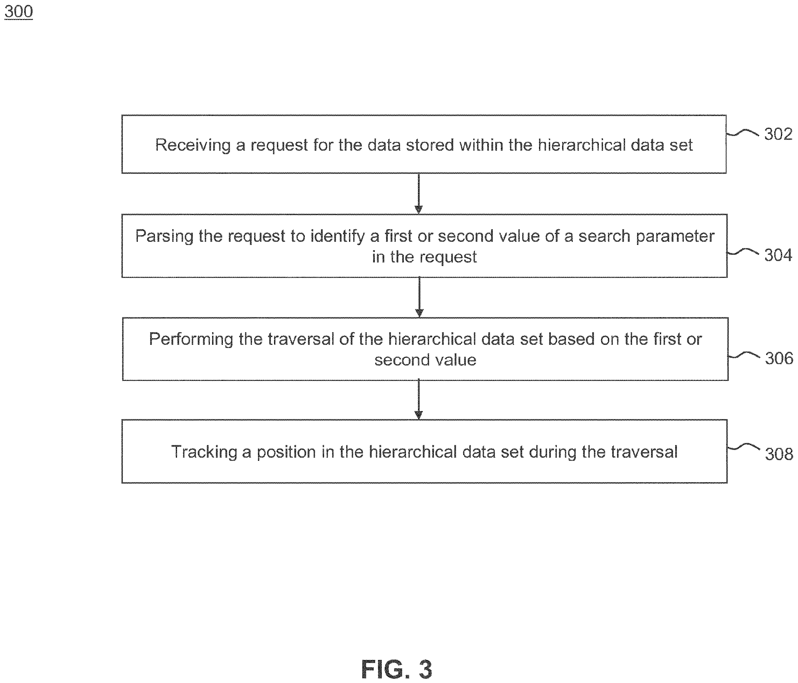

FIG. 3 is a flowchart illustrating traversal method 300 for identifying data within a hierarchical data set, according to some embodiments. Method 300 can be performed by processing logic that can comprise hardware (e.g., circuitry, dedicated logic, programmable logic, microcode, etc.), software (e.g., instructions executing on a processing device), or a combination thereof. As a non-limiting example of FIGS. 1-2, one or more functions described with respect to FIG. 3 may be performed by a server (e.g., system server 126), a media device (e.g., media device 106 of FIG. 1) or a display device (e.g., display device 108 of FIG. 1). In such an embodiment, any of these components may execute code in memory to perform certain steps of traversal method 300 of FIG. 3. While traversal method 300 of FIG. 3 will be discussed below as being performed by certain components of multimedia environment 102, other components may store the code and therefore may execute traversal method 300 by directly executing the code. Accordingly, the following discussion travesal method 300 will refer to components of FIGs. 1 and 2 as an exemplary non-limiting embodiment. Moreover, it is to be appreciated that not all steps may be needed to perform the disclosure provided herein. Further, some of the functions may be performed simultaneously, in a different order, or by the same components than shown in FIG. 3, as will be understood by a person of ordinary skill in the art. The following steps are discussed with respect to components installed in media device 106 but one would understand that performance of the steps is not limited to this aspect.

At 302, application 218 may submit a request for data stored with a hierarchical data set. Storage/buffers 216 may receive the request for the data and may store the hierarchical data set. In some aspects, storage/buffers 216 may be include flash memory and may store the hierarchical data set as a precompiled binary representation, or resource tree, within the flash memory. The request may be implemented as a unified API traversal function from API library 220. The unified API traversal function may be configured to traverse the hierarchical data set by walking through each resource node of the data set. In some aspects, the unified API traversal function may perform this traversal on the precompiled binary representation while it is stored in flash memory and without having to store any data in a separate RAM. By traversing the precompiled binary representation, not only is RAM conserved but also no format conversions are performed, which reduces the search time and reduces code complexity. The request may be configured to include at least one of a search parameter and an integer marker.

In some aspects, the hierarchical data set is formatted in a tree structure with each of the tree representing resources of the hierarchical data set. Examples of a tree structure include a directory of files (e.g., "/config/drivers/wifi/ssid") or a hierarchy of HTML pages of a web site. In some aspects, the hierarchical data set is implemented as an extensible markup language (XML) tree. In some aspects, the hierarchical data set is implemented as a javascript object notation (JSON) tree.

At 304, storage/buffers 216 may parse the request to identify the search parameter. The search parameter may be configured to with different values to indicate a type of traversal to be performed of the hierarchical data set. For example, a first value of the search parameter may be used to indicate a first type of traversal of the hierarchical data set and a second value of the search parameter may be used to indicate a second type of traversal of the hierarchical data set. The types of search that may be performed includes a resource search and a scan.

For example, the search parameter may include a search string to be located within the hierarchical data set which indicates a resource search is to be performed for a resource within the hierarchical data set that matches the search string. In some aspects, when executed with a search string, the unified API traversal function returns a location, such as a nested file directory, of the first instance of the search within the hierarchical data set.

In some aspects, the search parameter may be null or an empty value which indicates a scan is to be performed of the entire hierarchical data set. When operating with a null or empty search parameter, the scan returns a result from every node and stops at the node. To continue, the unified API traversal function may be called again and to stop, no further action is required (i.e., stop calling the unified API traversal function). A scan may return resource values and the locations of the resource value at each node of the hierarchical data set. In some aspects, the location of the resource value is returned as an updated position integer within the hierarchical data set. The scan may be performed when the calling application 218 does not have a priori knowledge of any values within the entire hierarchical data set.

At 306, storage/buffers 216 executes the unified API traversal function by performing a traversal of the hierarchical data set based on the value of the search parameter as described above. If the search parameter indicates a resource search, performing the traversal includes traversing the hierarchical data set until a resource value that matches the search string is located. The unified API traversal function may then return the location, such as a file location within a directory, that corresponds to the resource value. If the search parameter indicates a scan, performing the traversal includes traversing the hierarchical data set returning the resource value at each node of the hierarchical data set.

At 308, in some aspects, the unified API traversal function also is configured to increment the integer marker as the function traverses each node of the hierarchical data set. The unified API traversal function may track the position for either a resource search or a scan of the hierarchical data set. The purpose of the integer marker is to maintain a last searched location of the hierarchical data set so that subsequent executions of the unified API traversal function for a resource search may start at the last searched location, rather than at the beginning of the hierarchical data set. This can increase the efficiency of the resource search, mitigates the need for callback functions, and enables the ability to confine a search to a particular subtree of the hierarchical data set by starting at the location indicated by the position. That is, by providing a specific location of a node in the hierarchical data set, the unified API traversal function may start the search at that particular location instead of starting at the beginning of the tree.

### Example Computer System

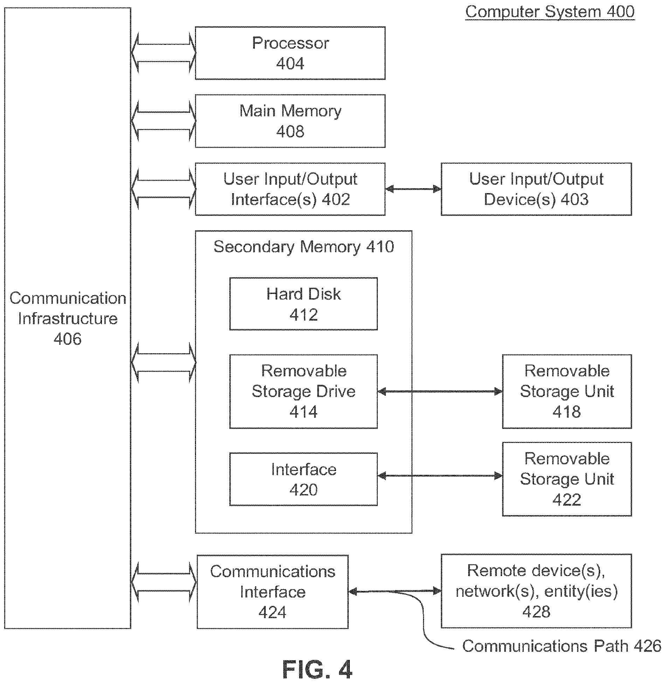

Various aspects may be implemented, for example, using one or more well-known computer systems, such as computer system 400 shown in FIG. 4. For example, the media device(s) 106 may be implemented using combinations or sub-combinations of computer system 400. Also or alternatively, one or more computer systems 400 may be used, for example, to implement any of the aspects discussed herein, as well as combinations and sub-combinations thereof.

Computer system 400 may include one or more processors (also called central processing units, or CPUs), such as a processor 404. Processor 404 may be connected to a communication infrastructure or bus 406.

Computer system 400 may also include user input/output device(s) 403, such as monitors, keyboards, pointing devices, etc., which may communicate with communication infrastructure 406 through user input/output interface(s) 402.

One or more of processors 404 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 400 may also include a main or primary memory 408, such as random access memory (RAM). Main memory 408 may include one or more levels of cache. Main memory 408 may have stored therein control logic (i.e., computer software) and/or data.

Computer system 400 may also include one or more secondary storage devices or memory 410. Secondary memory 410 may include, for example, a hard disk drive 412 and/or a removable storage device or drive 414. Removable storage drive 414 may be a floppy disk drive, a magnetic tape drive, a compact disk drive, an optical storage device, tape backup device, and/or any other storage device/drive.

Removable storage drive 414 may interact with a removable storage unit 418. Removable storage unit 418 may include a computer usable or readable storage device having stored thereon computer software (control logic) and/or data. Removable storage unit 418 may be a floppy disk, magnetic tape, compact disk, DVD, optical storage disk, and/ any other computer data storage device. Removable storage drive 414 may read from and/or write to removable storage unit 418.

Secondary memory 410 may include other means, devices, components, instrumentalities or other approaches for allowing computer programs and/or other instructions and/or data to be accessed by computer system 400. Such means, devices, components, instrumentalities or other approaches may include, for example, a removable storage unit 422 and an interface 420. Examples of the removable storage unit 422 and the interface 420 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 400 may further include a communication or network interface 424. Communication interface 424 may enable computer system 400 to communicate and interact with any combination of external devices, external networks, external entities, etc. (individually and collectively referenced by reference number 428). For example, communication interface 424 may allow computer system 400 to communicate with external or remote devices 428 over communications path 426, which may be wired and/or wireless (or a combination thereof), and which may include any combination of LANs, WANs, the Internet, etc. Control logic and/or data may be transmitted to and from computer system 400 via communication path 426.

Computer system 400 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 400 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 400 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some aspects, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 400, main memory 408, secondary memory 410, and removable storage units 418 and 422, as well as tangible articles of manufacture embodying any combination of the foregoing. Such control logic, when executed by one or more data processing devices (such as computer system 400 or processor(s) 404), may cause such data processing devices to operate as described herein.

Based on the teachings contained in this disclosure, it will be apparent to persons skilled in the relevant art(s) how to make and use aspects of this disclosure using data processing devices, computer systems and/or computer architectures other than that shown in FIG. 4. In particular, aspects can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary aspects as contemplated by the inventor(s), and thus, are not intended to limit this disclosure or the appended claims in any way.

While this disclosure describes exemplary aspects for exemplary fields and applications, it should be understood that the disclosure is not limited thereto. Other aspects and modifications thereto are possible, and are within the scope and spirit of this disclosure. For example, and without limiting the generality of this paragraph, aspects are not limited to the software, hardware, firmware, and/or entities illustrated in the figures and/or described herein. Further, aspects (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

## Claims

1. A computer-implemented method for a media device identifying data stored within a hierarchical data set, comprising:
receiving a request for the data;
parsing the request to identify a search parameter, wherein a first value of the search parameter indicates a first type of traversal of the hierarchical data set and a second value of the search parameter indicates a second type of traversal of the hierarchical data set;
performing a traversal of the hierarchical data set based on the first value of the search parameter or the second value of the search parameter; and
tracking a position in the hierarchical data set during the traversal.

2. The computer-implemented method of claim 1, wherein:
the hierarchical data set is formatted in a tree structure; or
the hierarchical data set is implemented as an extensible markup language (XML) tree; or
the hierarchical data set is implemented as a javascript object notation (JSON) tree.

3. The computer-implemented method of claim 1, wherein the request for the data is implemented as a unified traversal application programming interface (API) function.

4. The computer-implemented method of claim 1, wherein the first value comprises a search string, wherein the traversal is the first type of traversal, and the first type of traversal is a resource search of the hierarchical data set, and wherein the resource search returns a result from the hierarchical data set that matches the search string.

5. The computer-implemented method of claim 1, wherein the second value comprises a null value, wherein the traversal is the second type of traversal, wherein the hierarchical data set comprises a plurality of nodes, and the second type of traversal is a scan of the hierarchical data set, and wherein the scan returns a plurality of values corresponding to the plurality of nodes.

6. The computer-implemented method of claim 1, wherein the hierarchical data set comprises a plurality of nodes and wherein tracking the position in the hierarchical data set during the traversal comprises:
incrementing an integer marker for each node of the plurality of nodes that is traversed during the traversal.

7. The computer-implemented method of claim 1, wherein the hierarchical data set is stored as a precompiled binary representation of a resource tree in a flash memory of the media device.

8. A system, comprising:
one or more memories;
at least one processor each coupled to at least one of the one or more memories and configured to perform operations for identifying data stored within a hierarchical data set, the operations comprising:
receiving a request for the data;
parsing the request to identify a search parameter, wherein a first value of the search parameter indicates a first type of traversal of the hierarchical data set and a second value of the search parameter indicates a second type of traversal of the hierarchical data set;
performing a traversal of the hierarchical data set based on the first value of the search parameter or the second value of the search parameter; and
tracking a position in the hierarchical data set during the traversal.

9. The system of claim 8, wherein:
the hierarchical data set is formatted in a tree structure; or
the hierarchical data set is implemented as an extensible markup language (XML) tree.

10. The system of claim 8, wherein the request for the data is implemented as a unified traversal application programming interface (API) function.

11. The system of claim 8, wherein:
the first value comprises a search string, wherein the traversal is the first type of traversal, and the first type of traversal is a resource search of the hierarchical data set, and wherein the resource search returns a result from the hierarchical data set that matches the search string; and/or
the second value comprises a null value, wherein the traversal is the second type of traversal, wherein the hierarchical data set comprises a plurality of nodes, and the second type of traversal is a scan of the hierarchical data set, and wherein the scan returns a plurality of values corresponding to the plurality of nodes.

12. A non-transitory computer-readable medium having instructions stored thereon that, when executed by at least one computing device, cause the at least one computing device to perform operations for identifying data stored within a hierarchical data set, the operations comprising:
receiving a request for the data;
parsing the request to identify a search parameter, wherein a first value of the search parameter indicates a first type of traversal of the hierarchical data set and a second value of the search parameter indicates a second type of traversal of the hierarchical data set;
performing a traversal of the hierarchical data set based on the first value of the search parameter or the second value of the search parameter; and
tracking a position in the hierarchical data set during the traversal.

13. The non-transitory computer-readable medium of claim 12, wherein the hierarchical data set is formatted in a tree structure.

14. The non-transitory computer-readable medium of claim 12, wherein the request for the data is implemented as a unified traversal application programming interface (API) function.

15. The non-transitory computer-readable medium of claim 12, wherein:
the first value comprises a search string, wherein the traversal is the first type of traversal, and the first type of traversal is a resource search of the hierarchical data set, and wherein the resource search returns a result from the hierarchical data set that matches the search string; and/or
the second value comprises a null value, wherein the traversal is the second type of traversal, wherein the hierarchical data set comprises a plurality of nodes, and the second type of traversal is a scan of the hierarchical data set, and wherein the scan returns a plurality of values corresponding to the plurality of nodes.
